# EUROPÄISCHE PATENTSCHRIFT

(11) **EP 3 839 138 B1**
(45) Veröffentlichungstag und Bekanntmachung des Hinweises auf die Patenterteilung: **05.10.2022**
(21) Anmeldenummer: 19219126.0
(22) Anmeldetag: 20.12.2019
(51) Int. Cl.: D21H 11/00, B01D 39/16, B65D 85/804, B65D 85/808, D21H 27/00, D21H 27/08, D21H 27/10

(54) **WASSERDAMPFDURCHLÄSSIGES UND HEISSWASSERBESTÄNDIGES PAPIER**
WATER-VAPOUR-PERMEABLE AND HOT WATER RESISTANT PAPER
PAPIER PERMÉABLE À LA VAPEUR ET RÉSISTANT À L'EAU CHAUDE

(43) Veröffentlichungstag der Anmeldung: 23.06.2021
(73) Patentinhaber: Mondi AG, 1030 Wien (AT)
(72) Erfinder: SCHWAIGER, Elisabeth, 9431 St. Stefan (AT); GOESS, Paulus, 9020 Klagenfurt (AT)
(74) Vertreter: Cunow, Gerda

(56) Entgegenhaltungen:
- EP-A1- 0 422 898

## Beschreibung

Die vorliegende Erfindung bezieht sich auf ein wasserdampfdurchlässiges und heißwasserbeständiges Papier bestehend im Wesentlichen aus Zellulose sowie aus für die Zelluloseherstellung erforderlichen Fabrikationshilfsmitteln, wie pH-Wert Einstellmittel basierend auf Säuren und/oder Basen bestehend im Wesentlichen aus Zellulose sowie aus für die Zelluloseherstellung unbedingt erforderlichen Fabrikationshilfsmitteln, wie pH-Wert Einstellmittel basierend auf Säuren und/oder Basen.

Spezielle wasserdampfdurchlässige und heißwasserbeständige Papiere, die als Kaffeefilter, Teefilter oder für andere Einsatzzwecke verwendet werden und die auch als Heißextraktionspapiere bezeichnet werden, müssen insbesondere, wenn sie im Lebensmittelbereich eingesetzt werden, bestimmten Anforderungen genügen. Nicht nur der eingesetzte Rohstoff, das sind im vorliegenden Fall die Holzschnitzel bzw. die Zellulose, sondern auch die Zuschlagstoffe sind exakt normiert und dürfen nur aus ganz wenigen bestimmten Substanzen gewählt werden.

Je nach gewähltem Einsatzzweck sind hierbei die Listen der Zuschlagstoffe unterschiedlich und insbesondere ist es erforderlich, dass nach einer Extraktion mit heißem Wasser der Gesamttrockenrückstand des Extrakts eine Menge von 10 mg/dm² nicht übersteigt und insbesondere muss auf üblicherweise bei der Herstellung von Papier verwendete Zuschlagstoffe weitgehend verzichtet werden.

In diesem Zusammenhang hat sich herausgestellt, dass die Anforderungen je nach nachfolgendem Einsatzzweck unterschiedlich sind und dass Papiere, die beispielsweise für die Teebereitung geeignet sind, als Kochbeutel nicht eingesetzt werden können.

Allerdings sind in der Technik neben den herkömmlichen Kaffee- und Teefiltern auch eine Mehrzahl von Spezialpapieren bekannt, welche beispielsweise für die Herstellung von Trinkbechern, in welchen heißer Kaffee bzw. heißer Tee oder Suppe vertrieben werden können, eingesetzt werden können bzw. dürfen. So ist beispielsweise aus der EP 1 985 437 A1 ein Verfahren bekannt geworden, mit welchem Papier zu Trinkbechern und dgl. verarbeitet wird, welches Papier unmittelbar nach seinem Formen im Lebensmittelberreich beispielsweise für heißen Kaffee oder heißen Tee eingesetzt werden kann.

Neben herkömmlichen Kaffeefiltern wird in letzter Zeit die Nachfrage nach Kapseln, in welchen der zu brühende Kaffee enthalten ist, immer größer, da Maschinen, die derartige Kapseln aufnehmen und damit Kaffee oder Tee bereiten können, nicht nur im industriellen Markt, sondern insbesondere auch in Privathaushalten vermehrt zum Einsatz gelangen. Bei Einsatz von derartigen Maschinen fällt eine übermäßig große Anzahl von gebrauchten Kunststoffkapseln oder Metallkapseln bzw. Kapseln aus beiden Materialien an, welche gegenwärtig zum größten Teil entsorgt werden bzw. als Sondermüll betrachtet werden. Kunststoff soll aufgrund der immer mehr überhand nehmenden Problematik von Kunststoffabfällen, die an den unzugänglichsten Orten, wie mitten auf dem Ozean gefunden werden, so entsorgt werden, dass er wiederverwertet wird und somit die größer werdende Problematik soweit wie möglich verringert wird. Metallkapseln, insbesondere Aluminiumkapseln sind extrem teuer und bedürfen eines hohen Energieaufwands bei ihrer Herstellung, so dass ein Erfordernis nach einer neuen Art von Behältern für mit Kapseln arbeitenden Kaffeemaschinen besteht, mit welchen mit Kaffee gefüllten Kapseln Kaffee gebrüht werden kann, ohne dass die verbrauchten Kapseln einer aufwendigen Aufarbeitung unterzogen werden müssen und ohne dass eine Gefahr für die Umwelt besteht.

Aus der EP 0 422 898 A1 ist ein optimiertes Design für eine Kaffeekapsel bekannt, enthaltend zwei rund geschnittene Filterpapiere, von welchen eines wenigstens 3 % gedehnt werden kann und das andere ein eine Deckfläche der Kapsel ausbildendes Papier mit einem Siegelmittel wie Polyethylen oder Polypropylen imprägniert ist, um es siegelfähig zu machen, darstellt.

Weiterhin wird in letzter Zeit die Nachfrage nach Behältnissen, in welchen bereits fertig zubereitete Nahrungsmittel enthalten sind, wie Suppenbehälter, Joghurtbecher sowie deren Deckel und Behältnisse für z.B. Backmischungen, in welchen die Produkte entweder verzehrfertig enthalten sind oder aber direkt in der Verpackung fertiggestellt werden können, immer größer. Aus Gründen des Umweltschutzes werden aus Kunststoff gefertigte Behälter bzw. Behälterabdeckungen immer weniger nachgefragt und insbesondere Papierbehälter als Alternative immer mehr nachgefragt.

Die Erfindung zielt nun darauf ab, ein wasserdampfdurchlässiges und heißwasserbeständiges Papier zur Verfügung zu stellen, welches für die Herstellung von Portionsbeuteln für heißextrahierbare, verzehrbare Substanzen, wie Milch, Tee, Kakao, Aromen und dgl. sowie Abdeckflächen für Heißgetränkebehälter, wie Suppenbehälter, Tee- und Kaffeekapseln und dgl. oder auch zur Heißzubereitung verschiedenster Lebensmittel geeigneter Behälter, Abdeckungen oder Verpackungen geeignet ist und welches weiterhin auch direkt für die Verpackung verschiedenster flüssiger, cremiger oder pastöser Nahrungsmittel eingesetzt werden kann.

Zur Lösung dieser Aufgabe ist das erfindungsgemäße wasserdampfdurchlässige und heißwasserbeständige Papier im Wesentlichen dadurch gekennzeichnet, dass das Papier ausschließlich Zellstoff mit Faserlängen von wenigstens 2,0 mm im längengewichteten Mittel, insbesondere wenigstens 2,5 mm im längengewichteten Mittel enthält, dass der das Papier ausbildende Zellstoff ein auf eine Stoffdichte von 30 - 35 % hochkonsistenzgemahlener und gegebenenfalls auf eine Stoffdichte von 4 - 6 % niederkonsistenzgemahlener Zellstoff ist, dass ein aus Zellstofffasern bestehender Feinstoffanteil in dem Papier auf Werte kleiner 6,5 % eingestellt ist und dass der pH-Wert im pseudoneutralen Bereich insbesondere auf Werte unter 7,5, vorzugsweise auf Werte zwischen 6,6 und 7,4 eingestellt ist und dass eine Dehnung des Papiers in Maschinenrichtung ≤ 3 % ist. Indem Papier gewählt wird, welches Zellstoff mit Faserlängen von wenigstens 2,0 mm im längengewichteten Mittel, insbesondere wenigstens 2,5 mm im längengewichteten Mittel enthält, gelingt es ein Papier herzustellen, dessen Zugfestigkeit bzw. Berstfestigkeit im Vergleich zu herkömmlichen Papieren deutlich erhöht ist. Indem weiterhin der Feinstoffanteil in dem wasserdampfdurchlässigen und heißwasserbeständigen Papier so eingestellt wird, dass er kleiner 6,5 % ist, kann einerseits die erforderliche Luftdurchlässigkeit des Papieres gewährleistet werden und andererseits die Porengröße des Papiers gezielt eingestellt werden. Durch Einstellung des pH-Werts auf den pseudoneutralen Bereich, d.h. auf Werte kleiner als 7,5 und vorzugsweise auf Werte im Bereich von 6,6 bis 7,4 ist das Papier nicht nur als Heißextraktionspapier für beispielsweise Heißgetränke und Suppen geeignet, sondern es kann auch beispielsweise für heiß extrahierbare Nahrungsergänzungsmittel oder dgl. oder unmittelbar zur Herstellung von Behältern und/oder deren Abdeckungen für flüssige, pastöse oder cremige Lebensmittel verwendet werden.

Indem der das Papier ausbildende Zellstoff ein hochkonsistenzgemahlener und gegebenenfalls niederkonsistenzgemahlener Zellstoff ist, gelingt es die Dehnung des Papiers in Querrichtung gegenüber jener in Längsrichtung deutlich zu erhöhen und weiterhin kann sichergestellt werden, das bei Einsatz von ungebleichtem Zellstoff, die üblicherweise in diesem enthaltenen Splitter zu entfernen. Gemäß der Erfindung ist somit der das Papier ausbildende Zellstoff einer Hochkonsistenzmahlung mit einer Stoffdichte zwischen 30 % und 35 % unterworfen worden sowie gegebenenfalls zusätzlich einer Niederkonsistenzmahlung mit. einer Stoffdichte zwischen 4 % und 6 % unterworfen worden.

Im Rahmen dieser Anmeldung ist, wenn der Begriff "Papier" gewählt wird, ein "wasserdampfdurchlässiges und heißwasserbeständiges Papier" gemeint, welches sowohl als Behälter oder dessen Bestandteile und Abdeckungen, insbesondere für flüssige, cremige oder halbfeste Lebensmittel vor, nach oder während deren Herstellung verwendet werden kann als auch klassisch als Heißextraktionspapier beispielsweise zur Zubereitung von Kaffee oder dgl. eingesetzt werden kann.

Für ein besonders gut plan liegendes Papier, das gleichzeitig auch die erforderlichen Festigkeitseigenschaften aufweist, sind die Dehnungseigenschaften im Wesentlichen so eingestellt, dass ein Verhältnis einer Bruchdehnung in Maschinenrichtung (MD) : einer Bruchdehnung in Querrichtung (CD) nicht größer als 1 : 5:5, insbesondere nicht größer als 1 : 4,5.

Indem weiterhin die Dehnung, insbesondere Bruchdehnung des wasserdampfdurchlässigen und heißwasserbeständigen Papiers in Maschinenrichtung auf Werte ≤ 3 % beschränkt ist und bevorzugt auf Werte zwischen 1, 5 % und 3 % beschränkt ist, gelingt es ein Papier herzustellen, welches trotz der aus der Zellulosefaser stammenden relativ großen Dehnung in Querrichtung von bis zu 9,5 % eine gute Planlage gewährleistet und es daher beispielsweise für Deckel oder Abdeckungen von Suppenbehältern, Kaffeekapseln, Behältnissen für Milchprodukte oder auch als Behälter für Backmischungen und dgl. geeignet ist. Trotz dieser geringen Dehnung in Maschinenrichtung ist es mit einem derartigen Papier möglich, die für eine Heißextraktion auch unter Druck erforderliche Struktur des Papieres zur Verfügung zu stellen, wodurch ein formstabiles und haltbares Papier ausgebildet werden kann, das bei Anwendung erhöhter Temperaturen und Drücke nicht reißt bzw. dessen Faserstruktur nicht zerstört wird, zur Verfügung zu stellen.

Unter Zellstoff mit Faserlängen von wenigstens 2,5 mm im längengewichteten Mittel, werden Zellstoffe verstanden, deren Faserlängen im Mittelwert 2,5 mm betragen wobei Abweichungen vom Mittelwert möglichst gering sind und vorzugsweise nicht größer als ± 0,8 mm, insbesondere nicht größer als + 0,4 mm und besonders bevorzugt nicht größer als ± 0,2 mm sind.

Indem ein Zellstoff mit längengewichteten Faserlängen von wenigstens 2,0 mm im längengewichteten Mittel, insbesondere 2,5 mm im längengewichteten Mittel eingesetzt ist, wird der aus Zellulosefasern bestehende Feinstoffanteil mit extrem geringer Faserlänge unterdrückt. Mit einem derartigen Papier gelingt es insbesondere, gleichbleibende Eigenschaften zu erreichen, welche für den Einsatz z.B. als Deckel für Kaffeekapseln oder dgl. bei höheren Drücken geeignet sind, ohne dass ein Mitreißen von unerwünschten Feinstoff bzw. Ballaststoffen in das damit hergestellte Getränk zu befürchten ist. Wenn berücksichtigt wird, dass für das Herstellen von Heißgetränken sehr detaillierte Vorschriften bestehen, welche Bestandteile ein wasserdampfdurchlässiges und heißwasserbeständiges Papier aufweisen darf und insbesondere welche Mengen an Extrakt aus den Herstellungshilfsstoffen bzw. Zuschlagstoffen in dem Endprodukt enthalten sein dürfen, ist es einem Fachmann unmittelbar klar, dass die Zahl der Zuschlagstoffe nicht nur aufgrund gesetzlicher Anforderungen begrenzt sein muss, sondern insbesondere gewährleistet sein muss, dass nahezu keinerlei nicht absolut erforderliche Zusätze in dem Papier enthalten sind und insbesondere auch gewährleistet ist, dass keinerlei aus der Zellulose selbst stammende Verunreinigungen in das damit hergestellte Getränk mitgerissen werden können. Besonderes Augenmerk ist hierbei auch darauf zu richten, dass das Papier aluminiumfrei ist, damit es für Einsatzzwecke, welche einen Lebensmittelkontakt erfordern, zulässig ist.

Für eine weitere Verbesserung der Lebensmitteleignung des wasserdampfdurchlässigen und heißwasserbeständigen Papiers wird splitterfreies, ungebleichtes Papier eingesetzt. Zum Erreichen einer Splitterfreiheit des Papiers wird der das Papier ausbildende Zellstoff während der Papierherstellung einer Hochkonsistenzmahlung unterzogen, insbesondere einer Hochkonsistenzmahlung im Bereich von 130 bis 190 kWh/t, vorzugsweise etwa 170 kWh/t, welche Mahlung es ermöglicht, sämtliche Splitter aus dem Zellstoff zu entfernen und gleichzeitig jedoch eine übermäßige Dehnung der Zellulosefasern in Querrichtung vermeidet. Splitter stellen in der Papieroberfläche Artefakte dar und wirken sich mitunter nachteilig in einer anschließenden Verarbeitung aus. Sowohl aus optischen Gründen als auch aus Festigkeitsgründen müssen Splitter in der Papierstruktur vermieden werden. Ein Verfahren zur Bestimmung des Splittergehaltes ist in Tappi T275 - Somverville Shive Content beschrieben. Das Papier der gegenständlichen Erfindung verfügt über einen Splitteranteil von <0,01 % bei 0,15 mm Schlitzweite gemessen nach Tappi T275.

Überraschenderweise ist es gelungen, ein wasserdampfdurchlässiges und heißwasserbeständiges Papier herzustellen, bei welchem auf den Zusatz von Herstellungshilfsstoffen, wie Entschäumer, Ablagerungsbekämpfungsmittel, Stärke, Fixiermittel, Leimungsmittel, Füllstoffe oder dgl. verzichtet werden konnte und welches trotzdem auf einer modernen, schnelllaufenden Papiermaschine, welche Maschinengeschwindigkeiten von bis zu 900 m/min aufweist, hergestellt werden kann, ohne dass die Maschine deutlich unter der Maximalgeschwindigkeit betrieben werden muss. Normalerweise kann erst durch Zugabe von aus dem Stand der Technik bekannten Herstellungshilfsstoffen die Maschinengeschwindigkeit erhöht werden, was durch die spezielle Wahl der Einsatzstoffe und ihrem Aufschluss und Bearbeitung vermieden werden konnte.

Entsprechend der Erfindung ist das wasserdampfdurchlässige und heißwasserbeständige Papier daher dahingehend weitergebildet, dass während seiner Herstellung als pH-Wert Einstellmittel lediglich anorganische Säuren und Basen, wie Schwefelsäure (H₂SO₄) und Natronlauge (NaOH) verwendet werden. Hierbei ist es wichtig, dass insbesondere der Chloridgehalt niedrig gehalten wird, um das Einbringen von leicht löslichem Chlorid mittels des heißen Wassers in das Endprodukt während der Extraktionen zu vermeiden. Ebenfalls begrenzt werden muss der Stickstoffgehalt im Wasserextrakt, da eine erhöhter Stickstoffgehalt den Geschmack des mit dem Papier hergestellten Getränks eines fertiggebackenen Kuchens oder dgl. verändern könnte. Vorzugsweise wird daher der Gehalt an abspaltbaren Stickstoffverbindungen bei 220 °C, nach Kjeldalaufschluss entsprechend DIN 38406-E5-1:1983-10 photometrisch bestimmt, auf < 0,025 mg/g Trockenmaterial begrenzt.

Gemäß einer Weiterbildung der Erfindung ist der Zellstoff aus Zellstoff von Nadelhölzern, gewählt aus der Gruppe Tanne, Fichte, Kiefer, Lärche und Douglasie gewählt. Nadelhölzer haben bekanntermaßen hohe Faserlängen und werden insbesondere für die Herstellung von Papieren, welche eine hohe Zugfestigkeit besitzen müssen, üblicherweise eingesetzt. Gemäß der Erfindung wird versucht, einen Zellstoff zu wählen, welcher nicht nur längengewichtet ist, sondern bevorzugt auch aus ein und derselben Holzart oder Mischungen von zwei definierten Holzarten, wie z.B. Mischungen aus Fichte und Kiefer stammt.

Gemäß einer Weiterbildung der Erfindung ist der Zellstoff für das wasserdampfdurchlässige und heißwasserbeständige Papier derart gewählt, dass bis zu 15 %, vorzugsweise bis zu 10 %, insbesondere etwa 5 % des Zellstoffs aus Nadelhölzern durch Zellstoff aus Laubhölzern, gewählt aus der Gruppe Buche, Eiche, Aspe, Pappel, Akazie, Erle, Ahorn, Kastanie, Tupelo, Platane, Linde und Eukalyptus oder Mischungen aus zwei oder mehreren davon ersetzt sind. Um die Eigenschaften des Papiers im Wesentlichen unverändert aufrecht zu erhalten, können bis zu 15 %, vorzugsweise bis zu 10 %, insbesondere etwa 5 % des Zellstoffs durch Zellstoff aus Laubhölzern, welcher eine geringere Faserlänge als jener aus Nadelhölzern aufweist, durch Zellstoff aus Nadelhölzern ersetzt sein. Trotz dieses Ersatzes gelingt es gemäß der Erfindung insbesondere die Bruchdehnungseigenschaften des wasserdampfdurchlässigen und heißwasserbeständigen Papiers aufrecht zu erhalten.

Ein derartiges Papier gemäß der Erfindung kann, wie dies einer Weiterbildung entspricht, Flächengewichte zwischen 40 und 100 g/m², vorzugsweise 50 bis 80 g/m² aufweisen. Hierbei wird das Flächengewicht je nach beabsichtigtem Einsatz, wie Erhitzen oder Extraktion anzuwendendem Druck bzw. Dauer und Art der Anwendung gewählt und liegt häufig im Bereich von etwa 60 bis 80 g/m².

Um mit Sicherheit für sämtliche Anforderung für eine Extraktion von Nahrungs- bzw. Genussmitteln geeignet zu sein, ist gemäß einer Weiterbildung der Erfindung das wasserdampfdurchlässige und heißwasserbeständige Papier so gewählt, dass ein Chloridgehalt eines Heißwasserextrakts aus dem Papier unter 0,7 mg/l und ein Aluminiumgehalt eines Heißwasserextrakts aus dem Papier unter 0,1 mg/l liegt. Insbesondere die Absenkung des aus Hilfsmitteln stammenden Aluminiumgehalts ebenso wie der geringe Chloridgehalt ermöglicht einen Einsatz des wasserdampfdurchlässigen und heißwasserbeständigen Papiers auf dem Gebiet der Nahrungs- und Genussmittel.

Um insbesondere die gewünschte Oberflächenglätte eines derartigen Papiers mit Sicherheit aufrecht zu erhalten bzw. zu erreichen, ist das wasserdampfdurchlässige und heißwasserbeständige Papier dahingehend weitergebildet, dass es gegebenenfalls zusätzlich kalandriert ist. Der fakultative Schritt des Kalandrierens, insbesondere mittels eines Softnip-Kalanders oder Langnip-Kalanders und besonders bevorzugt mittels eines Schuhkalanders erlaubt eine Glättung der Oberfläche des Papiers ohne dass gleichzeitig die Berstfestigkeit, die Dehnungseigenschaften in Maschinenrichtung sowie der Gurley-Wert zu stark nachteilig beeinflusst werden. Die Wahl einer Schuhlänge von beispielsweise 50 bis 170 mm im Schuhkalander, Nipdrücke von bis zu 10 MPa, eine Oberflächentemperatur der Kalanderwalze von bis zu 280 °C, wirken sich positiv auf das erwünschte Glättungsverhalten und eine Bedruckbarkeit des wasserdampfdurchlässigen und heißwasserbeständigen Papiers aus. Bei Einsatz eines Softnip-Kalanders oder eines Langnip-Kalanders und insbesondere eines Schuhkalanders ist es günstig drauf zu achten, dass die Linienlasten der Kalanderwalze Werte von 350 kN/m, vorzugsweise von 250 kN/m und besonders bevorzugt von 250 kN/m nicht übersteigen, wodurch die erwünschte Glätte und Bedruckbarkeit des Papiers erreicht werden kann, um eine zu starke Verdichtung des Papiers zu vermeiden. Im Falle eines Langnip-Kalanders und insbesondere eines Schuhkalanders sollen die Werte für die Linienlasten von 700 kN/m, vorzugsweise 600 kN/m und besonders bevorzugt von 500 kN/m nicht übersteigen.

Gemäß einer Weiterbildung der Erfindung wird ein sulfatgekochter, ungebleichter Zellstoff für das wasserdampfdurchlässige und heißwasserbeständige Papier eingesetzt. Indem ungebleichter Zellstoff eingesetzt wird, wird der Einsatz von ansonsten nötigen Bleichmitteln vermieden, was insgesamt die Eignung des Papiers als Standbeutel oder Deckel für Heißextraktionsbehälter oder andere Behältnisse auf dem Genuss- und Lebensmittelsektor sowie im Bereich der Nahrungsergänzungsmittel deutlich verbessert.

Indem, wie dies einer Weiterbildung der Erfindung entspricht der Biegesteifigkeitsindex in Maschinenrichtung auf Werte zwischen 70 bis 600 Nm⁶/kg³, insbesondere 170 bis 400 Nm⁶/kg³ und besonders bevorzugt 200 bis 280 Nm⁶/kg³ eingestellt ist, wodurch gewährleistet wird, dass das Papier einerseits eine ausreichende Flexibilität aufweist, um nicht während des Einsatzes zu zerreißen, und andererseits die Steifigkeit ausreichend hoch ist, um beispielsweise selbst stehende Beutel bereitstellen zu können. In diesem Zusammenhang ist auch die Einstellung des spezifischen Weiterreißwiderstandsindex von Bedeutung. Dieser ist, wie dies einer Weiterbildung der Erfindung entspricht in Längs- und Querrichtung im Wesentlichen gleich groß und liegt im Bereich von 10,0 mN.m²/g bis 13,0 mN.m²/g.

Schließlich kann, um beispielsweise eine Wasseraufnahme eines derartigen wasserdampfdurchlässigen und heißwasserbeständigen Papiers und somit ein Feuchtwerden des darin enthaltenen Produkts mit Sicherheit hintanzuhalten und/oder einen entsprechenden Aromaschutz zu gewährleisten, die Erfindung dahingehend weitergebildet sein, dass das Papier beschichtet ausgebildet ist. Um sicherzustellen, dass wenigstens eine gegebenenfalls auf das Papier aufzubringende Beschichtung auf dem wasserdampfdurchlässigen und heißwasserbeständigen Papier gemäß der Erfindung gut haftet und nicht unbeabsichtigt abgelöst wird, wird gemäß einer Weiterbildung der Erfindung die Oberflächenenergie des Papiers auf > 33 mJ/m², bevorzugt > 35 mJ/m², besonders bevorzugt > 38 mJ/m² eingestellt. Die Oberflächenenergie wird hier als Summe aus polaren und dispersiven Anteilen in dem Papier sowie in oberflächennahen Schichten des Papiers verstanden. Die Bestimmung der Oberflächenenergie erfolgte mit einem Krüss Messgerät, als Testflüssigkeiten wurden Wasser und Diiodmethan verwendet. Der Unterschied zwischen der Oberseite und der Siebseite des Papiers hinsichtlich der Oberflächenenergien beträgt bevorzugt 3 mJ/m², besonders bevorzugt 2 mJ/m². Dadurch kann sichergestellt werden, dass beide Seiten des Papiers sich im Falle einer aufzubringenden Beschichtung gleichwertig verhalten und die Beschichtungen nicht z.B. einseitig unbeabsichtigt abgelöst werden. Die Oberflächenenergie des Papiers resultiert aus den verwendeten Zellstoffen und den unbedingt erforderlichen Fabrikationshilfsmitteln auf der Papiermaschine. Ihre Einstellung ist somit z.B. durch Wahl des Zellstoffs möglich.

Eine Beschichtung des Papiers kann zum Beispiel durch eines der folgenden Verfahren gewählt aus Laminieren, Kaschieren oder Extrusionsbeschichten oder -kaschieren, Dispersionsbeschichten oder Metallisieren erfolgen. Bei den für die Ausbildung von derartigen Beschichtungen einzusetzenden Beschichtungsmaterialien handelt es sich, außer bei dem Verfahren des Metallisierens, hauptsächlich um Kunststoffe, die den lebensmittelrechtlichen Anforderungen für die Heißextraktion oder Heißzubereitung genügen, da auch der Gesamtverbund aus Papier und Beschichtung(en) diesen entsprechen muss. Besonders bevorzugt sind Kunststoffe, welche auch biologisch abbaubar bzw. kompostierfähig sind, wie z.B. Polymilchsäure oder Polyvinylalkohole. Es können aber auch andere jeweils entsprechende Materialien verwendet werden, wie z.B. Polyethylen oder Polypropylen. Es können eine oder beide Seiten des Papiers beschichtet werden und je Papierseite kann eine unterschiedliche Anzahl und Art an Kunststoffen bzw. Materialien für die Beschichtung verwendet werden. Entsprechende Schichtdicken sind den jeweiligen Materialien und weiteren gewünschten Barriereeigenschaften anzupassen und betragen zwischen 5 und 25 µm, insbesondere 7 bis 20 µm pro Schicht und sind insgesamt nicht dicker als etwa 50 µm.

Das wasserdampfdurchlässige und heißwasserbeständige Papier wird vorzugsweise ungebleicht eingesetzt, jedoch ist prinzipiell auch der Einsatz eines gebleichten Papiers möglich, was jedoch aufgrund der im Herstellungsverfahren einzusetzenden Bleichmittel weniger günstig als die Verwendung von naturbraunem Papier ist.

Bevorzugt kann das wasserdampfdurchlässige und heißwasserbeständige Papier in einem Verfahren zur Herstellung von Abdeckungen zum Verschließen von Kapseln zur Tee und/oder Kaffeezubereitung und/oder Joghurt- und Milchprodukten oder auch zur Herstellung von frei stehenden Beuteln für z.B. Suppenzubereitung oder Heißgetränkezubereitung, wobei auch Bestandteile wie Milchpulver, Tee, Schokolade und dgl., die gegebenenfalls zusätzlich in Heißgetränken aufgelöst werden sollen, enthalten sein können, verwendet werden.

Die Erfindung wird nachfolgend anhand von Ausführungsbeispielen näher erläutert. Bezüglich der für die Beschreibung der Eigenschaften der hergestellten Produkte verwendeten Messgrößen ist festzuhalten, dass folgende Normen für ihre Messung bzw. Bestimmung herangezogen wurden und dass diese nachfolgend nicht mehr gesondert angeführt werden:

| | |
|---|---|
| Faserlänge längengewichtet Feinanteil (Fraktion 0,05 - 0,5 mm) | ISO 16065-2:2014 |
| Berstfestigkeit | ISO 2758:2014 |
| Bruchdehnung | ISO 1924-3:2005 |
| Biegewiderstandsindex, 50 mm Biegelänge, 15° Winkel | ISO 2493-1:2010 |
| Weiterreißwiderstandsindex | ISO 1974:2012 |
| Grammatur | ISO 536:2012 |
| Luftdurchlässigkeit nach Gurley | ISO 5636-5:2013 |
| Heißwasserextrakt | ISO 6588-2:2012 |
| Splittergehalt Somerville 0,15 mm Schlitzweite | Tappi T275 sp-18 |

### Beispiel 1

### Herstellung eines ersten wasserdampfdurchlässigen und heißwasserbeständigen Papiers gemäß der Erfindung

Ungebleichter Kraftsulfatzellstoff, der ausschließlich aus 80 % bis 81% Fichten und 19 % bis 20 % Kieferholz mit einer Kappa-Zahl von 42 hergestellt wurde, wurde zur Herstellung des wasserdampfdurchlässigen und heißwasserbeständigen Papiers eingesetzt. Auf einer Sackpapiermaschine, die pseudo-neutral gefahren wird und mit einer maximalen Geschwindigkeit von > 1000 m/min, und die insbesondere zur Herstellung des Papiers mit etwa 504 m/min betrieben wurde, wurde zur Absenkung und Einstellung des pH-Wertes ausschließlich 98 %ige Schwefelsäure verwendet. Das anfallende Siebwasser hat einen pH-Wert von 6,2 bis etwa 7,5. Chemikalien, die üblicherweise bei der Papierherstellung eingesetzt werden, wie Alaun, Stärke, Ablagerungsbekämpfungsmittel, Entschäumer, Talkum oder Leimungsmittel, dürfen nicht eingesetzt werden, und die entsprechenden Zuschlagsöffnungen der Anlage werden wenigstens eine Stunde vor Beginn der Herstellung des wasserdampfdurchlässigen und heißwasserbeständigen Papiers geschlossen, um jegliche Restmengen dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des Papiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass dem Faserbrei kein Eigenausschuss, kein Trockenausschuss und keine Randstreifen während der Produktion des Papiers wieder zugeführt werden. Diese Ströme werden während der Produktion in einen sogenannten Zwischenbehälter geleitet.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30 % und 35 % eingestellt und im Falle der Niederkonsistenzmahlung zwischen 4 % und 6 % eingestellt wird. Weiterhin wird bei einer Hochkonsistenzmahlung die Dehnung in Querrichtung und die Niederkonsistenzmahlung entsprechend des Erreichens der Porosität (Gurley) 17-20 s gesteuert. Im angeführten Ausführungsbeispiel liegen die spezifischen Mahlbelastungen in der Hochkonsistenzmahlung zwischen 160-180 kWh/t und in der Niederkonsistenzmahlung 120-145 kWh/t.

Die Papiermaschine ist mit einem Langsieb, insbesondere einer Foudrinier-Siebpartie versehen. Das Papier wird in einer Pressenpartie mit zwei konventionellen Nips und einer Schuhpresse mit einem Druck im 1. Nip von 55 kN/m, im 2. Nip von 75 kN/m und in der Schuhpresse mit einem Druck von 500 kN/m gepresst. Die Trocknung des wasserdampfdurchlässigen und heißwasserbeständigen Papiers erfolgt in einer Trockenpartie mit Slalomtrocknung. Die Trocknung erfolgt so lange bis ein Zielwert von 7 % Restfeuchte erreicht ist.

Das so hergestellte Papier hatte eine
Luftdurchlässigkeit (Gurley) von 17 s
einen Biegesteifigkeitsindex von 207 Nm⁶/kg³
ein Flächengewicht von 61 g/m² und
eine Bruchdehnung von 1,92 % in Maschinenrichtung
eine Bruchdehnung von 6,25 % in Querrichtung

Zur Überprüfung der Eigenschaften wurden 2 g des Papiers einer Heißextraktion durch Kochen unter Rückfluss mit 100 ml Wasser für 1 Stunde entsprechend der Norm: ISO 6588-2:2012 hergestellt. Die in der Norm angegebene Pufferlösung/Kaliumchlorid-Lösung wurde nicht verwendet.

Das Fasermaterial wurde abfiltriert und im Filtrat wurden Chlorid mittels lonenchromatographie und Aluminium-Ionen mittels Atomabsorptionsspektrometrie bestimmt. Es zeigte sich, dass ein Chlorid-Gehalt von 0,62 mg/l und ein Aluminium-Gehalt von 0,079 mg/l erreicht werden konnte. Im Filtrat wurde ein pH-Wert von 6,8 bestimmt.

Der Faserstoff hatte eine Faserlänge von 2,47 mm, einen Feinanteil (Fraktion 0,05 - 0,5 mm) von 6,48 % und einen Splittergehalt von 0,005 %.

Die Oberflächenenergie betrug auf der Oberseite 40 mJ/m² und auf der Siebseite 42 mJ/m².

### Beispiel 2

### Herstellung eines zweiten wasserdampfdurchlässigen und heißwasserbeständigen Papiers gemäß der Erfindung

Ungebleichter Kraftsulfatzellstoff der ausschließlich aus 80 % bis 81 % Fichten- und 19 % bis 20 % Kieferholz mit einer Kappa-Zahl von 41 hergestellt wurde, wurde zur Herstellung des wasserdampfdurchlässigen und heißwasserbeständigen Papiers eingesetzt. Auf einer Sackpapiermaschine, die pseudo-neutral gefahren wird und eine maximale Geschwindigkeit von > 1000 m/min, und die insbesondere zur Herstellung des Papiers mit etwa 504 m/min betrieben wurde, wurde zur Absenkung und Einstellung des pH-Wertes ausschließlich 98 %ige Schwefelsäure verwendet. Das anfallende Siebwasser hat einen pH-Wert von 6,2 bis etwa 7,5. Chemikalien, die üblicherweise bei der Papierherstellung eingesetzt werden, wie Alaun, Stärke, Ablagerungsbekämpfungsmittel, Entschäumer, Talkum oder Leimungsmittel dürfen nicht eingesetzt werden, und die entsprechenden Zuschlagsöffnungen der Anlage werden wenigstens eine Stunde vor Beginn der Herstellung des Papiers geschlossen, um jegliche Restmenge dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des wasserdampfdurchlässigen und heißwasserbeständigen Papiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass dem Faserbrei kein Eigenausschuss, kein Trockenausschuss und keine Randstreifen während der Produktion des Papiers wieder zugeführt werden. Diese Ströme werden während der Produktion in einen sogenannten Zwischenbehälter gestellt.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30 % und 35% eingestellt und im Falle der Niederkonsistenzmahlung zwischen 4 % und 6 % eingestellt wird. Weiterhin wird bei einer Hochkonsistenzmahlung die Dehnung in Querrichtung und die Niederkonsistenzmahlung entsprechend des Erreichens der Porosität (Gurley) 17 bis 20 s gesteuert. Im angeführten Ausführungsbeispiel liegen die spezifischen Mahlbelastungen in der Hochkonsistenzmahlung zwischen 160 und 180 kWh/t und in der Niederkonsistenzmahlung 120 bis 145 kWh/t.

Die Papiermaschine ist mit einem Langsieb, insbesondere einer Foudrinier-Siebpartie versehen. Das Papier wird in einer Pressenpartie mit zwei konventionellen Nips und einer Schuhpresse mit einem Druck im 1. Nip von 55 kN/m, im 2. Nip von 75 kN/m und in der Schuhpresse mit einem Druck von 500 kN/m gepresst. Die Trocknung des wasserdampfdurchlässigen und heißwasserbeständigen Papiers erfolgt in einer Trockenpartie mit Slalomtrocknung. Die Trocknung erfolgt bis ein Zielwert von 7% Restfeuchte erreicht ist.

Das so hergestellte Papier hatte eine
Luftdurchlässigkeit (Gurley) von 15,1 s
Biegesteifigkeitsindex 237 Nm⁶/kg³
ein Flächengewicht von 65 g/m² und
eine Bruchdehnung von 1,77 % in Maschinenrichtung
eine Bruchdehnung von 7,69 % in Querrichtung

Zur Überprüfung der Eigenschaften wurden 2 g des Papiers einer Heißextraktion durch Kochen unter Rückfluss mit 100 ml Wasser für 1 Stunde hergestellt entsprechend der Norm: ISO 6588-2:2012. Die in der Norm angegebene Pufferlösung/Kaliumchlorid-Lösung wurde nicht verwendet.

Das Fasermaterial wurde abfiltriert und im Filtrat wurden Chlorid mittels lonenchromatographie und Aluminium-Ionen mittels Atomabsorptionsspektrometrie bestimmt. Es zeigte sich, dass ein Chlorid-Gehalt von 0,66 mg/l und ein Aluminium-Gehalt von 0,052 mg/l erreicht werden konnte. Im Filtrat wurde ein pH-Wert von 6,7 bestimmt.

Der Faserstoff hatte eine Faserlänge von 2,62 mm, einen Feinanteil (Fraktion 0,05 - 0,5 mm) von 5,19 % und einen Splittergehalt von 0,005 %.

Die Oberflächenenergie betrug auf der Oberseite 39 mJ/m² und auf der Siebseite 41 mJ/m.

### Beispiel 3

### Herstellung eines dritten wasserdampfdurchlässigen und heißwasserbeständigen Papiers gemäß der Erfindung

Gebleichter Kraftsulfatzellstoff, der aus 56 % bis 60 % Fichten- und 25 % bis 29 % Kiefernholz und 15 % Birke mit einer Kappa-Zahl von <5 hergestellt wurde, wurde zur Herstellung des wasserdampfdurchlässigen und heißwasserbeständigen Papiers eingesetzt. Auf einer Sackpapiermaschine, die pseudo-neutral gefahren wird und eine maximale Geschwindigkeit von etwa 900 m/min, und die insbesondere zur Herstellung des Papiers mit 620 m/min betrieben wurde, wurde zur Absenkung und Einstellung des pH-Wertes ausschließlich 98 %ige Schwefelsäure verwendet. Das anfallende Siebwasser hat einen pH-Wert von 6,7 bis etwa 6,9. Chemikalien, die üblicherweise bei der Papierherstellung eingesetzt werden, wie Alaun, Stärke, Ablagerungsbekämpfungsmittel, Entschäumer, Talkum oder Leimungsmittel, dürfen nicht eingesetzt werden, und die entsprechenden Zuschlagsöffnungen der Anlage werden wenigstens eine Stunde vor Beginn der Herstellung des Papiers geschlossen, um jegliche Restmenge dieser Materialien im herzustellenden Papier sicher hintanzuhalten. Ebenso werden Faserfangstoffe zu anderen Ausschussbehältern verschoben, um eine Verunreinigung des Papiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass dem Faserbrei kein Eigenausschuss, kein Trockenausschuss und keine Randstreifen während der Produktion des Papiers wieder zugeführt werden. Diese Ströme werden während der Produktion in einen sogenannten Zwischenbehälter gestellt.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30 % und 35% eingestellt und im Falle der Niederkonsistenzmahlung zwischen 4 % und 6 % eingestellt wird. Weiterhin wird bei einer Hochkonsistenzmahlung die Dehnung in Querrichtung und die Niederkonsistenzmahlung entsprechend des Erreichens der Porosität (Gurley) 17-20 s gesteuert. Im angeführten Ausführungsbeispiel liegen die spezifischen Mahlbelastungen in der Hochkonsistenzmahlung zwischen 70-80 kWh/t und in der Niederkonsistenzmahlung 40-50 kWh/t.

Die Papiermaschine ist mit einem Langsieb, insbesondere einer Foudrinier-Siebpartie versehen. Das Papier wird in einer Pressenpartie mit drei Nips hergestellt und im 1. Nip mit 60 kN/m, im 2. Nip mit 90 kN/m und im 3. Nip mit 95 kN/m gepresst. Die Trocknung des Papiers erfolgt in einer Trockenpartie mit Slalomtrocknung. Die Trocknung erfolgt so lange bis ein Zielwert von 7 % Restfeuchte erreicht ist.

Das so hergestellte Papier hatte eine
Luftdurchlässigkeit (Gurley) von 19,2 s
Biegesteifigkeitsindex 83 Nm⁶/kg³
ein Flächengewicht von 100 g/m² und
eine Bruchdehnung von 2,12 % in Maschinenrichtung
eine Bruchdehnung von 7,83 % in Querrichtung

Zur Überprüfung der Eigenschaften wurde aus 2 g des Papiers ein Heißextrakt durch Kochen unter Rückfluss mit 100 ml Wasser für 1 Stunde entsprechend der Norm: ISO 6588-2:2012 hergestellt. Die in der Norm angegebene Pufferlösung/Kaliumchlorid-Lösung wurde nicht verwendet.

Das Fasermaterial wurde abfiltriert und im Filtrat wurden Chlorid mittels lonenchromatographie und Aluminium-Ionen mittels Atomabsorptionsspektrometrie bestimmt. Es zeigte sich, dass ein Chlorid-Gehalt von 0,69 mg/l und ein Aluminium-Gehalt von 0,038 mg/l erreicht werden konnte. Im Filtrat wurde ein pH-Wert von 6,8 bestimmt.

Der Faserstoff hatte eine Faserlänge von 2,33 mm, einen Feinanteil (Fraktion 0,05 - 0,5 mm) von 6,24% und einen Splittergehalt von 0,001%.

Die Oberflächenenergie betrug auf der Oberseite 44 mJ/m² und auf der Siebseite 46 mJ/m².

### Beispiel 4

### Herstellung eines vierten wasserdampfdurchlässigen und heißwasserbeständigen Papiers gemäß der Erfindung

Ungebleichter Kraftsulfatzellstoff, der ausschließlich aus 80 % bis 81 % Fichten- und 19 % bis 20 % Kieferholz mit einer Kappa-Zahl von 44 hergestellt wurde, wurde zur Herstellung des wasserdampfdurchlässigen und heißwasserbeständigen Papiers eingesetzt. Auf einer Sackpapiermaschine, die pseudo-neutral gefahren wird und eine maximale Geschwindigkeit von etwa 900 m/min, und die insbesondere zur Herstellung des Papiers mit 605 m/min betrieben wurde, wurde zur Absenkung und Einstellung des pH-Wertes ausschließlich 98 %ige Schwefelsäure verwendet. Das anfallende Siebwasser hat einen pH-Wert von 6,6 bis etwa 7,1. Chemikalien, die üblicherweise bei der Papierherstellung eingesetzt werden, wie Alaun, Stärke, Ablagerungsbekämpfungsmittel, Entschäumer, Talkum oder Leimungsmittel, dürfen nicht eingesetzt werden, und die entsprechenden Zuschlagsöffnungen der Anlage werden wenigstens eine Stunde vor Beginn der Herstellung des Papiers geschlossen, um jegliche Restmenge dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des Papiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass dem Faserbrei kein Eigenausschuss, kein Trockenausschuss und keine Randstreifen während der Produktion des wasserdampfdurchlässigen und heißwasserbeständigen Papiers wieder zugeführt werden. Diese Ströme werden während der Produktion in einen sogenannten Zwischenbehälter gestellt.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30 % und 35 % eingestellt und im Falle der Niederkonsistenzmahlung zwischen 4 % und 6 % eingestellt wird. Weiterhin wird bei einer Hochkonsistenzmahlung die Dehnung in Querrichtung und die Niederkonsistenzmahlung entsprechend des Erreichens der Porosität (Gurley) 17 - 20 s gesteuert. Im angeführten Ausführungsbeispiel liegen die spezifischen Mahlbelastungen in der Hochkonsistenzmahlung zwischen 170-190 kWh/t und in der Niederkonsistenzmahlung 90-120 kWh/t.

Die Papiermaschine ist mit einem Langsieb, insbesondere einer Foudrinier-Siebpartie versehen. Das Papier wird in einer Pressenpartie mit drei Nips hergestellt und im 1. Nip mit 70 kN/m, im 2. Nip mit 90 kN/m und im 3. Nip mit 105 kN/m gepresst.

Die Trocknung des Papiers erfolgt in einer Trockenpartie mit Slalomtrocknung. Die Trocknung erfolgt so lange bis ein Zielwert von 7 % Restfeuchte erreicht ist.

Das so hergestellte Papier hatte eine
Luftdurchlässigkeit (Gurley) von 18,7 s
Biegesteifigkeitsindex 422 Nm⁶/kg³
ein Flächengewicht von 40 g/m² und
eine Bruchdehnung von 2,28 % in Maschinenrichtung
eine Bruchdehnung von 8,21 % in Querrichtung

Zur Überprüfung der Eigenschaften wurde aus 2 g des Papiers ein Heißextrakt durch Kochen unter Rückfluss mit 100 ml Wasser für 1 Stunde entsprechend der Norm: ISO 6588-2:2012 hergestellt. Die in der Norm angegebene Pufferlösung/Kaliumchlorid-Lösung wurde nicht verwendet.

Das Fasermaterial wurde abfiltriert und im Filtrat wurden Chlorid mittels lonenchromatographie und Aluminium-Ionen mittels Atomabsorptionsspektrometrie bestimmt. Es zeigte sich, dass ein Chlorid-Gehalt von 0,59 mg/l und ein Aluminium-Gehalt von 0,071 mg/l erreicht werden konnte. Im Filtrat wurde ein pH-Wert von 6,7 bestimmt.

Der Faserstoff hatte eine Faserlänge von 2,51 mm, einen Feinanteil (Fraktion 0,05 - 0,5 mm) von 5,45 % und einen Splittergehalt von 0,005 %.

Die Oberflächenenergie betrug auf der Oberseite 37 mJ/m² und auf der Siebseite 39 mJ/m².

## Patentansprüche

1. Wasserdampfdurchlässiges und heißwasserbeständiges Papier bestehend im Wesentlichen aus Zellulose sowie aus für die Zelluloseherstellung erforderlichen Fabrikationshilfsmitteln, wie pH-Wert Einstellmittel basierend auf Säuren und/oder Basen, **dadurch gekennzeichnet, dass** das Papier ausschließlich Zellstoff mit Faserlängen von wenigstens 2,0 mm im längengewichteten Mittel, insbesondere wenigstens 2,5 mm im längengewichteten Mittel enthält, dass der das Papier ausbildende Zellstoff ein auf eine Stoffdichte von 30 - 35 % hochkonsistenzgemahlener und gegebenenfalls auf eine Stoffdichte von 4 - 6 % niederkonsistenzgemahlener Zellstoff ist, dass ein aus Zellstofffasern bestehender Feinstoffanteil in dem Papier auf Werte kleiner 6,5 % eingestellt ist, dass der pH-Wert des Papiers im pseudoneutralen Bereich insbesondere auf Werte unter 7,5, vorzugsweise auf Werte zwischen 6,6 und 7,4 eingestellt ist, und dass eine Dehnung des Papiers in Maschinenrichtung ≤ 3 % ist.

2. Papier nach Anspruch 1, **dadurch gekennzeichnet, dass** es ein Verhältnis einer Bruchdehnung in Maschinenrichtung (MD) : einer Bruchdehnung in Querrichtung (CD) nicht größer als 1 : 5:5, insbesondere nicht größer als 1 : 4,5 ist.

3. Papier nach Anspruch 1 oder 2, **dadurch gekennzeichnet**, der Zellstoff aus Zellstoff von Nadelhölzern, gewählt aus der Gruppe, Tanne, Fichte, Kiefer, Lärche und Douglasie oder Mischungen aus zwei oder mehreren davon gewählt ist.

4. Papier nach Anspruch 3, **dadurch gekennzeichnet, dass** bis zu 15 %, vorzugsweise bis zu 10 %, insbesondere etwa 5 % des Zellstoffs aus Nadelhölzern durch Zellstoff aus Laubhölzern, gewählt aus der Gruppe Buche, Eiche, Aspe, Pappel, Akazie, Erle, Ahorn, Kastanie, Tupelo, Platane, Linde und Eukalyptus oder Mischungen aus zwei oder mehreren davon ersetzt sind.

5. Papier nach einem der Ansprüche 1 bis 4, **dadurch gekennzeichnet, dass** das Papier Flächengewichte zwischen 40 und 100 g/m², vorzugsweise 50 bis 80 g/m² aufweist.

6. Papier nach einem der Ansprüche 1 bis 5, **dadurch gekennzeichnet, dass** es eine Luftdurchlässigkeit nach Gurley zwischen 15 s und 25 s, insbesondere zwischen 17 s und 20 s aufweist.

7. Papier nach einem der Ansprüche 1 bis 6, **dadurch gekennzeichnet, dass** ein Chloridgehalt eines Wasserextrakts aus dem Papier unter 0,7 mg/l und ein Aluminiumgehalt eines Wasserextrakts aus dem Papier unter 0,1 mg/l liegt.

8. Papier nach einem der Ansprüche 1 bis 7, **dadurch gekennzeichnet, dass** es einen Biegesteifigkeitsindex in Maschinenrichtung von 70 bis 600 Nm⁶/kg³, insbesondere. 170 bis 400 Nm⁶/kg³ und besonders bevorzugt von 200 bis 280 Nm⁶/kg³aufweist.

9. Papier nach einem der Ansprüche 1 bis 8, **dadurch gekennzeichnet, dass** das Papier gegebenenfalls kalandriert, insbesondere in einem Softnip-Kalander oder Langnip-Kalander und insbesondere in einem Schuhkalander kalandriert ist.

10. Papier nach einem der Ansprüche 1 bis 9, **dadurch gekennzeichnet dass**, die Oberflächenenergie des Papiers auf > 33 mJ/m², bevorzugt > 35 mJ/m², besonders bevorzugt > 38 mJ/m² eingestellt ist.

11. Verwendung des wasserdampfdurchlässigen und heißwasserbeständigen Papiers gemäß einem der Ansprüche 1 bis 10 in einem Verfahren zur Herstellung von Portionsbeuteln, Deckelpapier für Kaffeekapseln, Lebensmittelbehälter wie beispielsweise Joghurtbecher oder Suppenbehälter oder als Behälter für Backmischungen.

## Claims

1. A water vapour-permeable and hot water-resistant paper made substantially of cellulose and of manufacturing additives required for cellulose production, such as pH-value adjusting agents based on acids and/or bases, **characterized in that** the paper exclusively contains cellulose with fibre lengths of at least 2.0 mm as a length-weighted mean, in particular of at least 2.5 mm as a length-weighted mean, that the cellulose forming the paper is a cellulose ground to a consistency of 30 - 35 % by high-consistency grinding and possibly to a consistency of 4 - 6 % by low-consistency grinding, that a proportion of fines consisting of cellulose fibres in the paper is set at values smaller than 6.5 % and that the pH value is set in the pseudo-neutral range, in particular at values under 7.5, preferably at values between 6.6 and 7.4, and that an elongation of the paper in the machine direction is ≤ 3 %.

2. The paper according to claim 1, **characterized in that** that a ratio between a strain at break in the machine direction (MD) : a strain at break in the cross direction (CD) is no greater than 1 : 5.5, in particular no greater than 1 : 4.5.

3. The paper according to claim 1 or 2, **characterized in that** the cellulose is selected from cellulose from conifers chosen from the group including fir trees, spruce, pine, larch and Douglas fir or mixtures of two or more thereof.

4. The paper according to claim 3, **characterized in that** up to 15 %, preferably up to 10 %, particularly roughly 5 %, of the cellulose from conifers is replaced by cellulose from deciduous trees chosen from the group comprising beech, oak, aspen, poplar, acacia, alder, maple, chestnut, tupelo, sycamore, lime and eucalyptus or mixtures of two or more thereof.

5. The paper according to one of claims 1 to 4, **characterized in that** the paper has basis weights of between 40 and 100 g/m², preferably 50 to 80 g/m².

6. The paper according to one of claims 1 to 5, **characterized in that** it has an air permeability according to Gurley of between 15 s and 25 s, in particular between 17 s and 20 s.

7. The paper according to one of claims 1 to 6, **characterized in that** a chloride content of a water extract from the paper is below 0.7 mg/l and an aluminium content of a water extract from the paper is below 0.1 mg/l.

8. The paper according to one of claims 1 to 7, **characterized in that** it has a bending stiffness index in the machine direction of 70 to 600 Nm⁶/kg³, in particular 170 to 400 Nm⁶/kg³, and particularly preferably 200 to 280 Nm⁶/kg³.

9. The paper according to one of claims 1 to 8, **characterized in that** the paper is possibly calendered, in particular calendered in a soft nip calender or a long nip calender and, in particular, in a shoe calender.

10. The paper according to one of claims 1 to 9, **characterized in that** the surface energy of the paper is adjusted to > 33 mJ/m², preferably > 35 mJ/m², particularly preferably > 38 mJ/m².

11. Use of the water vapour-permeable and hot water-resistant paper according to claims 1 to 10 in a method for the production of sachets, lid paper for coffee capsules, foodstuff containers such as yoghurt pots or soup containers, for example, or containers for baking mixes.

## Revendications

1. Papier perméable à la vapeur d'eau et résistant à l'eau chaude, constitué essentiellement de cellulose ainsi que d'adjuvants de fabrication nécessaires à la fabrication de la cellulose, tels que des agents d'ajustement du pH à base d'acides et/ou de bases, **caractérisé en ce que** le papier contient exclusivement de la pâte à papier avec des longueurs de fibres d'au moins 2,0 mm en moyenne pondérée par la longueur, en particulier d'au moins 2,5 mm en moyenne pondérée par la longueur, que la pâte à papier réalisant le papier est une pâte à papier broyée à haute consistance à une densité de matière de 30 à 35 % et éventuellement broyée à basse consistance à une densité de matière de 4 à 6 %, qu'une proportion de matière fine constituée de fibres de pâte à papier dans le papier est ajustée à des valeurs inférieures à 6,5 %, que le pH du papier dans le domaine pseudo-neutre est ajusté en particulier à des valeurs inférieures à 7,5, de préférence à des valeurs comprises entre 6,6 et 7,4, et qu'un allongement du papier dans le sens machine est ≤ 3 %.

2. Papier selon la revendication 1, **caractérisé en ce qu'**il un rapport d'un allongement à la rupture dans le sens machine (MD) : un allongement à la rupture dans le sens transversal (CD) est non supérieur à 1 : 5:5, en particulier non supérieur à 1 : 4,5.

3. Papier selon la revendication 1 ou 2, **caractérisé en ce que** la pâte à papier est choisie parmi la pâte de conifères, choisis dans le groupe du sapin, de l'épicéa, du pin, du mélèze et du douglas ou des mélanges de deux ou plusieurs d'entre eux.

4. Papier selon la revendication 3, **caractérisé en ce que** jusqu'à 15 %, de préférence jusqu'à 10 %, en particulier environ 5 % de la pâte de conifères sont remplacés par de la pâte de feuillus, choisis dans le groupe du hêtre, du chêne, du tremble, du peuplier, de l'acacia, de l'aulne, de l'érable, du châtaignier, du tupélo, du platane, du tilleul et de l'eucalyptus ou des mélanges de deux ou plusieurs d'entre eux.

5. Papier selon l'une quelconque des revendications 1 à 4, **caractérisé en ce que** le papier présente des grammages compris entre 40 et 100 g/m², de préférence de 50 à 80 g/m².

6. Papier selon l'une quelconque des revendications 1 à 5, **caractérisé en ce qu'**il présente une perméabilité à l'air selon Gurley comprise entre 15 s et 25 s, notamment entre 17 s et 20 s.

7. Papier selon l'une quelconque des revendications 1 à 6, **caractérisé en ce qu'**une teneur en chlorure d'un extrait aqueux du papier est inférieure à 0,7 mg/l et une teneur en aluminium d'un extrait aqueux du papier est inférieure à 0,1 mg/l.

8. Papier selon l'une quelconque des revendications 1 à 7, **caractérisé en ce qu'**il présente un indice de rigidité à la flexion dans le sens machine de 70 à 600 Nm⁶/kg³, notamment 170 à 400 Nm⁶/kg³ et de manière particulièrement préférée de 200 à 280 Nm⁶/kg³.

9. Papier selon l'une quelconque des revendications 1 à 8, **caractérisé en ce que** le papier est éventuellement calandré, en particulier calandré dans une soft calandre ou une calandre à longue zone de pincement et notamment dans une calandre à sabot.

10. Papier selon l'une quelconque des revendications 1 à 9, **caractérisé en ce que** l'énergie de surface du papier est ajustée à > 33 mJ/m², de préférence > 35 mJ/m², de manière particulièrement préférée > 38 mJ/m².

11. Utilisation du papier perméable à la vapeur d'eau et résistant à l'eau chaude selon l'une quelconque des revendications 1 à 10 dans un procédé de fabrication de sachets-portions, de papier pour couvercle de capsules de café, de récipients alimentaires tels que des pots de yaourt ou des récipients de soupe, ou comme récipients pour préparations.
